(19) Europäisches Patentamt
European Patent Office
Office européen des brevets

(11) EP 3 238 839 A1

(12) EUROPÄISCHE PATENTANMELDUNG

(43) Veröffentlichungstag:
01.11.2017 Patentblatt 2017/44

(51) Int Cl.:
B08B 17/06 (2006.01)      B82Y 30/00 (2011.01)
B81C 1/00 (2006.01)

(21) Anmeldenummer: 17168337.8

(22) Anmeldetag: 27.04.2017

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(30) Priorität: 29.04.2016 DE 102016207466

(71) Anmelder: Deutsche Institute für Textil- und
Faserforschung Denkendorf
73770 Denkendorf (DE)

(72) Erfinder:
• Konrad, Wilfried
72076 Tübingen (DE)
• Scherrieble, Andreas
71638 Ludwigsburg (DE)
• Stegmaier, Thomas
73277 Owen (DE)

(74) Vertreter: Patentanwälte
Ruff, Wilhelm, Beier, Dauster & Partner mbB
Kronenstraße 30
70174 Stuttgart (DE)

(54) GEGENSTAND MIT EINER REIBUNGSMINDERNDEN UND INSBESONDERE DIE ENTGASUNG VON FLÜSSIGKEITEN BEWIRKENDEN OBERFLÄCHE

(57) Gegenstand (1) mit einer Oberfläche (10), wobei die Oberfläche (10) mikrostrukturierte und sich verjüngende Vertiefungen (15) aufweist. Weiterhin Verfahren zur Herstellung des Gegenstandes (1) sowie Verwendungen des Gegenstandes (1).

FIG. 1

**Beschreibung**

ANWENDUNGSGEBIET UND STAND DER TECHNIK

Die vorliegende Erfindung betrifft einen Gegenstand, welcher eine vorzugsweise reibungsmindernde und insbesondere die Entgasung von Flüssigkeiten bewirkende Oberfläche aufweist, ein Verfahren zur Herstellung eines derartigen Gegenstandes sowie Verwendungen eines solchen Gegenstandes.

Bei einer Relativbewegung zwischen einer festen Oberfläche und einer Flüssigkeit tritt ein Reibungswiderstand auf, welcher der Relativbewegung entgegengesetzt wirkt. Damit eine Relativbewegung überhaupt stattfinden kann, muss dieser Reibungswiderstand für die Dauer der Relativbewegung überwunden werden. Dies führt zu einem erhöhten Energiebedarf und mithin zu höheren Energiekosten.

Durch das Auftreten von Fouling, d.h. von unerwünschten Anlagerungen von Feststoffen auf festen Oberflächen, können sich Energiebedarf und Energiekosten aufgrund eines mit dem Fouling einhergehenden erhöhten Reibungswiderstandes beträchtlich erhöhen und zu signifikanten wirtschaftlichen Schäden führen.

Zur Verminderung des zwischen einer festen Oberfläche und einer Flüssigkeit auftretenden Reibungswiderstandes stehen diverse aktive Prozesse zur Verfügung.

Beispielsweise kann die zu adressierende Oberfläche mit Druckluft beaufschlagt werden. Eine Alternative besteht in dem stetigen Zuführen von Luftblasen oder dem Absaugen von oberflächlichen Ablagerungen. Diese Prozesse haben jedoch den prinzipiellen Nachteil, dass es sich um energieverzehrende und aufwendige Prozesse handelt.

Eine hierarchische, fraktale Struktur zur Reduzierung des Reibungswiderstandes bei einer Relativbewegung zwischen einer festen Oberfläche und einer Flüssigkeit ist aus der US 2005/0061221 A1 bekannt.

Ferner sind superhydrophobe Oberflächen mit nut- oder rillenförmigen Vertiefungen bekannt (Vorobyev et al.: Multifunctional surfaces produced by femtosecond laser pulses", Journal of Applied Physics 117, 033103, 2015; Park et al.: "A numerical study of the effects of superhydrophobic surface on skin-friction drag in turbulent channel flow, Physics of Fluids 25, 110815, 2013; Wilson: "Superhydrophobic surfaces reduce drag", Physics Today, October 2009, 16-19; Barbier et al.: "Large Drag Reduction over Superhydrophobic Riblets", arXiv: 1406.0787vl [physics.flu-dyn] 2 June 2014; Lee et al.: "Underwater Restoration and Retention of Gases on Superhydrophobic Surfaces for Drag Reduction", Physical Review Letters PRL 106,014502, 2011; Choi et al.: "Effective slip and friction reduction in nanograted superhydrophobic microchannels", Physics of Fluids 18, 087105, 2006; und Daniello: "Drag Reduction In Turbulent Flows Over Micropatterned Superhydrophobic Surfaces", Masters Theses 1896-February 2014, University of Massachusetts-Amherst).

Ferner ist bekannt, dass der Strömungswiderstand über gerillten Oberflächen geringer ist als über glatten Oberflächen (Jahanmiri et al.: "Large Eddy Simulation Of Turbulent Drag Reduction By V-Shaped Riblets", International Journal of Latest Research in Science and Technology, Vol. 4, Issue 1: Page No. 42-46, January-February 2015).

Unbenetzbare Oberflächen mit Nanofasern sind aus der WO 2005/005679 A2 bekannt.

Unbenetzbare Oberflächen mit hydrophoben Filamenten sind aus der WO 2007/099141 A2 bekannt.

Da in nahezu allen technischen Gebieten Reibungswiderstände zwischen Oberflächen und Flüssigkeiten überwunden werden müssen, besteht ein anhaltender Bedarf für Oberflächen, welche in der Lage sind, den Reibungswiderstand zwischen festen Oberflächen und Flüssigkeiten, vorzugsweise Wasser, zu reduzieren.

Da ferner in vielen technischen Gebieten Entgasungsprozesse von Flüssigkeiten stattfinden, besteht außerdem ein Bedarf für Oberflächen, welche in der Lage sind, dispergierte oder gelöste Gase aus Flüssigkeiten zu extrahieren.

AUFGABE UND LÖSUNG

Der vorliegenden Erfindung liegt daher die Aufgabe zugrunde, derartige Oberflächen zur Verfügung zu stellen.

Gelöst wird die der Erfindung zugrunde liegende Aufgabe durch einen Gegenstand mit einer Oberfläche mit den Merkmalen des unabhängigen Anspruchs 1, durch ein Verfahren gemäß Anspruch 14 sowie durch eine Verwendung gemäß Anspruch 15. Bevorzugte Ausführungsformen sind in den abhängigen Ansprüchen definiert. Der Wortlaut sämtlicher Ansprüche wird hiermit durch ausdrückliche Bezugnahme zum Inhalt der vorliegenden Beschreibung gemacht.

Gemäß einem ersten Aspekt betrifft die Erfindung einen Gegenstand mit einer Oberfläche.

Der Gegenstand zeichnet sich besonders dadurch aus, dass die Oberfläche mikrostrukturierte und sich verjüngende Vertiefungen aufweist.

Überraschenderweise stellte sich heraus, dass eine derartige Oberfläche beim Inkontaktbringen mit einer Flüssigkeit, vorzugsweise Wasser, in der Lage ist, Gasschichten, vorzugsweise Luftschichten, in den Vertiefungen zu bilden oder einzufangen und für einen bestimmten Zeitraum in den Vertiefungen zu halten. Besonders überraschend war, dass eine Oberfläche der vorstehend beschriebenen Art, beispielsweise beim Auftreten unterschiedlicher Strömungsgeschwindigkeiten, eine selbstständige Erneuerung von Gasschichten in den Vertiefungen ermöglicht, ohne dass hierfür aktive Prozesse erforderlich wären. Die Erneuerung der Gasschichten ist vorzugsweise ausschließlich passiver Natur.

Konkret konnte insbesondere gezeigt werden, dass die erfindungsgemäß vorgesehene Oberfläche die Ausbildung von Gas/Flüssigkeit-Grenzflächen, vorzugsweise Luft/Wasser-Grenzflächen, bewirkt, welche die Oberfläche des Gegenstandes wenigstens im Bereich der Vertiefungen, beranden. Weiterhin konnte gezeigt werden, dass diese Grenzflächen gegenüber Auslenkungen, welche beispielsweise durch (plötzliche) Druckschwankungen ausgelöst werden können, mechanisch stabil sind. Weiterhin konnte gezeigt werden, dass in den Vertiefungen etablierte bzw. eingeschlossene Gasschichten persistieren, sich also nicht in der umgebenden Flüssigkeit lösen. Besonders überraschend war die Tatsache, dass die erfindungsgemäß vorgesehene Oberfläche in der Lage ist, frei in der Flüssigkeit flottierende Gasblasen, vorzugsweise Luftblasen, an die Oberfläche anzudocken. Dies ermöglicht mit besonderem Vorteil einen selbstständigen Austausch von Gasschichten.

Über den Vertiefungen der Oberfläche findet somit eine vorzugsweise vollständige Trennung von Gegenstand und Flüssigkeit durch dazwischenliegende Gasschichten statt. Dadurch verringert sich der unmittelbare Kontakt zwischen der Oberfläche des Gegenstandes und der Flüssigkeit. Da die Viskosität eines Gases erheblich kleiner ist als die Viskosität einer Flüssigkeit, fällt ein Energieverlust durch Reibung sehr viel geringer aus als bei einem direkten Kontakt zwischen der Flüssigkeit und der Oberfläche des Gegenstandes. Die in den Vertiefungen gebildeten oder eingefangenen Gasschichten können als "Gasinseln", insbesondere "Luftinseln", aufgefasst werden, welche einen direkten Kontakt zwischen der Oberfläche des Gegenstandes und der Flüssigkeit vermeiden. Dadurch kann eine Reibungsminderung beim Umströmen der Oberfläche mit einer Flüssigkeit bewirkt werden. Ferner können derartige Oberflächen eine Extraktion von in Flüssigkeiten gelösten Gasen und insbesondere eine Speicherung der extrahierten Gase in Luftschichten bewirken, welche in den Vertiefungen etabliert oder eingefangen sind. Damit sind neuartige Entgasungsprozesse realisierbar. Über die Anzahl der Vertiefungen kann mit besonderem Vorteil das Ausmaß einer Reibungsminderung und/oder Entgasung von Flüssigkeiten gezielt beeinflusst bzw. gesteuert werden.

Dem Ausdruck "Gegenstand" liegt im Sinne der vorliegenden Erfindung eine breite Bedeutung zugrunde. So bezeichnet der Ausdruck "Gegenstand" im Sinne der vorliegenden Erfindung ein Material oder einen Körper, welches/welcher eine bestimmte physische Ausdehnung und insbesondere eine bestimmte Form besitzt. Bezüglich möglicher Ausgestaltungen des Gegenstandes wird auf die im Folgenden gemachten Ausführungen Bezug genommen.

Der Ausdruck "mikrostrukturierte Vertiefungen" bedeutet im Sinne der vorliegenden Erfindung Vertiefungen, welche jeweils wenigstens eine Abmessung, d.h. eine Abmessung oder mehrere Abmessungen, in einer Größenordnung von 100 nm bis 1000 $\mu$m aufweisen. Bevorzugt weisen mikrostrukturierte Vertiefungen im Sinne der vorliegenden Erfindung wenigstens eine Abmessung in einer Größenordnung von 1 $\mu$m bis 250 $\mu$m, insbesondere 2.5 $\mu$m bis 25 $\mu$m, vorzugsweise 5 $\mu$m bis 10 $\mu$m, oder 10 $\mu$m bis 30 $\mu$m, auf. Bei der wenigstens einen Abmessung kann es sich insbesondere um den Öffnungsdurchmesser der Vertiefungen und/oder die Tiefe der Vertiefungen und/oder die Wandungslänge der Vertiefungen und/oder den gegenseitigen Abstand von Mittelpunkten benachbarter Vertiefungsöffnungen handeln. Hierauf wird im Folgenden ebenfalls noch näher eingegangen werden. Vorzugsweise weisen die mikrostrukturierten Vertiefungen ausschließlich Abmessungen, wie insbesondere eine Tiefe, einen Öffnungsdurchmesser sowie eine Wandungslänge, in einer Größenordnung, wie in diesem Absatz offenbart, auf.

Der Ausdruck "sich verjüngende Vertiefungen" bedeutet im Sinne der vorliegenden Erfindung Vertiefungen, welche jeweils wenigstens abschnittsweise, vorzugsweise durchgehend, enger bzw. schmaler werden, und zwar vorzugsweise in Richtung des Grundes (Boden) der Vertiefungen.

Der Ausdruck "Flüssigkeit" kann im Sinne der vorliegenden Erfindung insbesondere Wasser, eine wässrige Dispersion oder eine wässrige Lösung, ein organisches Lösungsmittel oder ein Öl bedeuten. Bevorzugt bedeutet der Ausdruck "Flüssigkeit" im Sinne der vorliegenden Erfindung Wasser.

Der Ausdruck "Gas" kann im Sinne der vorliegenden Erfindung beispielsweise Luft, Sauerstoff, Stickstoff, Kohlendioxid oder ein Edelgas, wie insbesondere Helium oder Argon, bedeuten. Bevorzugt bedeutet der Ausdruck "Gas" im Sinne der vorliegenden Erfindung Luft. Entsprechend kann der Ausdruck "Gasschichten" im Sinne der vorliegenden Erfindung beispielsweise Luftschichten, Sauerstoffschichten, Stickstoffschichten, Kohlendioxidschichten oder Edelgasschichten, wie insbesondere Helium- oder Argonschichten, bedeuten. Bevorzugt bedeutet der Ausdruck "Gasschichten" im Sinne der vorliegenden Erfindung Luftschichten.

In einer bevorzugten Ausführungsform handelt es sich bei den Vertiefungen um sich durchgehend, d.h. ohne Unterbrechung, insbesondere kontinuierlich oder diskontinuierlich, vorzugsweise kontinuierlich, verjüngende Vertiefungen. Mit anderen Worten verjüngen sich die Vertiefungen in einer bevorzugten Ausführungsform jeweils durchgehend, insbesondere kontinuierlich oder diskontinuierlich, vorzugsweise kontinuierlich.

In einer weiteren Ausführungsform handelt es sich bei den Vertiefungen um Vertiefungen, welche sich nur abschnittsweise verjüngen.

In einer weiteren Ausführungsform weisen die Vertiefungen jeweils eine eckenlose, insbesondere kreisförmige, ellipsenförmige oder ovale, vorzugsweise kreisförmige, Öffnung, auf.

In einer weiteren Ausführungsform weisen die Vertiefungen jeweils eine polygone, insbesondere dreieckförmige, viereckförmige, quadratische, rechteckförmige, trapezförmige, fünfeckförmige, sechseckförmige, siebeneckförmige, achteckförmige, neuneckförmige oder zehneckförmige, Öffnung auf.

In einer weiteren Ausführungsform weisen die Vertiefungen jeweils einen spitz zulaufenden oder spitzförmigen Vertiefungsgrund (Vertiefungsboden) auf.

In einer weiteren Ausführungsform weisen die Vertiefungen jeweils einen flachen Grund (Boden), d.h. einen Grund ohne Erhebungen oder Vertiefungen, auf.

In einer weiteren Ausführungsform weisen die Vertiefungen jeweils einen eckenlosen, insbesondere kreisförmigen, ellipsenförmigen oder ovalen, vorzugsweise kreisförmigen, Vertiefungsgrund (Vertiefungsboden) auf.

In einer weiteren Ausführungsform weisen die Vertiefungen jeweils einen polygonalen, insbesondere dreieckförmigen, viereckförmigen, quadratischen, rechteckförmigen, trapezförmigen, fünfeckförmigen, sechseckförmigen, siebeneckförmigen, achteckförmigen, neuneckförmigen oder zehneckförmigen, Vertiefungsgrund (Vertiefungsboden) auf.

In einer weiteren Ausführungsform weisen die Vertiefungen jeweils einen gasdurchlässigen Vertiefungsgrund (Vertiefungsboden) auf.

In einer weiteren Ausführungsform handelt es sich bei den Vertiefungen um kegelförmige Vertiefungen, kreiskegelförmige Vertiefungen, kegelstumpfförmige Vertiefungen, kreiskegelstumpfförmige Vertiefungen, pyramidenförmige Vertiefungen oder pyramidenstumpfförmige Vertiefungen. Anders ausgedrückt, verjüngen sich die Vertiefungen in einer weiteren Ausführungsform jeweils kegelförmig, kreiskegelförmig, kegelstumpfförmig, kreiskegelstumpfförmig, pyramidenförmig oder pyramidenstumpfförmig.

In einer weiteren Ausführungsform handelt es sich bei den Vertiefungen um eine Kombination aus zwei oder mehreren der im vorherigen Absatz genannten Vertiefungsformen.

In einer weiteren Ausführungsform handelt es sich bei den Vertiefungen um rotationssymmetrische Vertiefungen.

Vorzugsweise handelt es sich bei den Vertiefungen um kegelförmige, insbesondere kreiskegelförmige, Vertiefungen. Die Vertiefungen können sich insbesondere in Form von geraden Kegeln, insbesondere geraden Kreiskegeln, oder in Form von schiefen Kegeln, insbesondere schiefen Kreiskegeln, verjüngen. Im Falle von kegelförmigen Vertiefungen kommen die mittels der Erfindung erzielbaren Wirkungen und Vorteile besonders zur Geltung.

In einer weiteren Ausführungsform weisen die Vertiefungen jeweils einen halben Öffnungswinkel ε und beim Inkontaktbringen mit einer Flüssigkeit, vorzugsweise Wasser, einen Kontaktwinkel θ auf, welche die folgende Gleichung erfüllen:

$$\varepsilon < \theta - \pi/2,$$

wobei

der halbe Öffnungswinkel ε einen Winkel zwischen einer Wandungsoberfläche der Vertiefungen und einer Längsachse, vorzugsweise Rotationsachse, der Vertiefungen definiert
und
der Kontaktwinkel θ einen Winkel definiert, welchen ein in den Vertiefungen enthaltener Flüssigkeitstropfen, vorzugsweise Wassertropfen, zu einer Wandungsoberfläche der Vertiefungen bildet.

Im Falle von kegelförmigen Vertiefungen entspricht der halbe Öffnungswinkel ε dem Winkel zwischen den Mantellinien (Erzeugenden) der kegelförmigen Vertiefungen und der Längsachse, vorzugsweise Rotationsachse, der kegelförmigen Vertiefungen.

Die Vertiefungen weisen in einer weiteren Ausführungsform jeweils einen halben Öffnungswinkel ε von 2° bis 20°, insbesondere 5° bis 15°, vorzugsweise 8° bis 12°, auf.

In einer weiteren Ausführungsform weisen die Vertiefungen jeweils einen Kontaktwinkel θ von 90° bis 120°, insbesondere 100° bis 115°, vorzugsweise 105° bis 110°, auf.

Durch eine Beschichtung des Gegenstandes, insbesondere der Vertiefungen, mit einem hydrophoben und/oder oleophoben Material lässt sich der Kontaktwinkel θ mit besonderem Vorteil vergrößern. Hierauf wird im Folgenden noch näher eingegangen werden.

In einer weiteren Ausführungsform weisen die Vertiefungen jeweils eine Tiefe von 2 μm bis 1000 μm, insbesondere 5 μm bis 50 μm, vorzugsweise 10 μm bis 30 μm, auf. Insbesondere können die Vertiefungen jeweils eine Tiefe von 2.5 μm bis 25 μm, vorzugsweise 5 μm bis 10 μm, aufweisen. Die Tiefe entspricht dabei dem Abstand des Vertiefungsgrundes von der Vertiefungsöffnung. Im Falle von kegelförmigen Vertiefungen entspricht die Tiefe dem Abstand des spitzförmigen Vertiefungsgrundes (Kegelspitze) von der runden, vorzugsweise kreisförmigen, Vertiefungsöffnung (Basis(kreis)ebene der kegelförmigen Vertiefungen).

In einer weiteren Ausführungsform weisen die Vertiefungen jeweils eine Öffnung mit einem Durchmesser von 1 μm bis 250 μm, insbesondere 2.5 μm bis 25 μm, vorzugsweise 5 μm bis 10 μm, auf. Im Falle von kegelförmigen Vertiefungen entspricht der Öffnungsdurchmesser dem Durchmesser der runden, vorzugsweise kreisförmigen, Öffnung der Vertiefungen (entspricht dem Durchmesser der Basis(kreis)ebenen der der kegelförmigen Vertiefungen).

In einer weiteren Ausführungsform weisen Mittelpunkte benachbarter Vertiefungsöffnungen jeweils einen gegenseitigen Abstand von 1 μm bis 250 μm, insbesondere 2.5 μm bis 25 μm, vorzugsweise 5 μm bis 10 μm, auf.

In einer weiteren Ausführungsform sind die Vertiefungen in einer Dichte von 16 Vertiefungen bis 106 Vertiefungen pro mm2, insbesondere 1600 Vertiefungen bis 1.6 x 105 Vertiefungen pro mm2, vorzugsweise 104 Vertiefungen bis 4 x 104 Vertiefungen pro mm2, auf der Oberfläche des Gegenstandes ausgebildet. Insbesondere die in diesem Absatz offenbarten Dichten für die Vertiefungen bewirken eine besonders merkliche Herabsetzung des Reibungswiderstandes sowie insbesondere eine besonders merkliche Entgasung von Flüssigkeiten im Falle einer Relativbewegung zwischen der Oberfläche des Gegenstandes und einer Flüssigkeit.

In einer weiteren Ausführungsform sind die Vertiefungen jeweils durch eine umlaufende Wandung, d.h. eine Wandung ohne Unterbrechungen, begrenzt.

In einer weiteren Ausführungsform weisen die Vertiefungen jeweils ein Hohlraumvolumen von 0.5 $\mu m^3$ bis 50 x 106 $\mu m^3$, insbesondere 8 $\mu m3$ bis 8 x 103 $\mu m^3$, vorzugsweise 60 $\mu m^3$ bis 103 $\mu m^3$, auf.

Weiterhin ist es bevorzugt, wenn die Vertiefungen jeweils eine Wandungslänge, insbesondere in Längsrichtung, von 2 $\mu m$ bis 1000 $\mu m$, insbesondere 5 $\mu m$ bis 50 $\mu m$, vorzugsweise 10 $\mu m$ bis 30 $\mu m$, aufweisen. Insbesondere können die Vertiefungen jeweils eine Wandungslänge von 2.5 $\mu m$ bis 25 $\mu m$, vorzugsweise 5 $\mu m$ bis 10 $\mu m$, aufweisen. Im Falle von kegelförmigen Vertiefungen entspricht die Wandungslänge einer Mantellinie oder den Mantellinien der kegelförmigen Vertiefungen bzw. der Länge einer Mantellinie oder der Mantellinien der kegelförmigen Vertiefungen.

Vorzugsweise weisen die Vertiefungen jeweils

- eine Tiefe von 2 $\mu m$ bis 1000 $\mu m$, insbesondere 5 $\mu m$ bis 50 $\mu m$, vorzugsweise 10 $\mu m$ bis 30 $\mu m$, und/oder

- eine Öffnung mit einem Durchmesser von 1 $\mu m$ bis 250 $\mu m$, insbesondere 2.5 $\mu m$ bis 25 $\mu m$, vorzugsweise 5 $\mu m$ bis 10 $\mu m$, und/oder

- eine Wandungslänge von 2 $\mu m$ bis 1000 $\mu m$, insbesondere 5 $\mu m$ bis 50 $\mu m$, vorzugsweise 10 $\mu m$ bis 30 $\mu m$, auf.

In einer weiteren Ausführungsform weisen die mikrostrukturierten Vertiefungen jeweils ausschließlich Abmessungen in einer Größenordnung von 0.1 $\mu m$ bis 1000 $\mu m$, insbesondere 1 $\mu m$ bis 250 $\mu m$, bevorzugt 2.5 $\mu m$ bis 25 $\mu m$, insbesondere 5 $\mu m$ bis 10 $\mu m$, oder 10 $\mu m$ bis 30 $\mu m$, auf.

In einer weiteren Ausführungsform weisen die Vertiefungen jeweils ein Durchmesser-Tiefen-Verhältnis von 0.07 bis 0.73, insbesondere 0.17 bis 0.53, vorzugsweise 0.28 bis 0.42, auf.

In einer weiteren Ausführungsform weisen die Oberflächen (Wandungsoberflächen) der Vertiefungen insgesamt einen Flächenanteil von 50 % bis 99 %, insbesondere 70 % bis 97 %, bevorzugt 85 % bis 95 %, auf, bezogen auf die Oberfläche des Gegenstandes. Die Oberfläche des Gegenstandes setzt sich dabei insbesondere aus den Oberflächen (Wandungsoberflächen) der Vertiefungen sowie den zwischen den Vertiefungsöffnungen ausgebildeten Oberflächenbereichen zusammen.

Grundsätzlich können die Vertiefungen jeweils gleich oder unterschiedlich ausgebildet sein. Insbesondere können die Vertiefungen beispielsweise hinsichtlich ihrer Form oder ihrer Abmessungen unterschiedlich ausgebildet sein.

Erfindungsgemäß ist es jedoch bevorzugt, wenn die Vertiefungen jeweils gleich ausgebildet sind.

In einer weiteren Ausführungsform sind die Vertiefungen reihenförmig, d.h. in Form von Reihen, auf der Oberfläche des Gegenstandes angeordnet. Die Reihen können dabei einen geradlinigen Verlauf oder einen nicht geradlinigen, insbesondere kurvenförmigen, bogenförmigen oder mäanderförmigen, Verlauf aufweisen.

Bevorzugt sind die Vertiefungen in Form von zueinander parallel angeordneten Reihen auf der Oberfläche des Gegenstandes angeordnet.

Erfindungsgemäß kann es insbesondere bevorzugt sein, wenn die reihenförmig angeordneten Vertiefungen versetzt zueinander angeordnet sind. Dadurch ist mit besonderem Vorteil eine dichtere Anordnung der Vertiefungen auf der Oberfläche des Gegenstandes erzielbar.

Die Vertiefungen können weiterhin insbesondere in Längsrichtung, Breitenrichtung (bzw. Querrichtung) und/oder Diagonalrichtung des Gegenstandes auf der Oberfläche des Gegenstandes angeordnet sein.

In einer weiteren Ausführungsform weist der Gegenstand ein Material auf oder besteht aus einem Material, welches ausgewählt ist aus der Gruppe bestehend aus Polymer wie thermoplastisches Polymer, Polyolefin, Polyester, Polyamid, Polyurethan wie thermoplastisches Polyurethan, Elastomer, Polyimid, Polyetherketon, Polyetheretherketon, Polysiloxan wie Polydimethylsiloxan, Fluorcarbon, Perfluorcarbon, Keramikmaterial, Siliziumdioxid wie Quarz, Glas, Carbid wie Metallcarbid, Nitrid wie Metallnitrid, Metalloxid, Metall und Kombinationen, insbesondere Verbundstoffe, aus zwei oder mehreren der genannten Materialien.

Das Polyolefin kann insbesondere ausgewählt sein aus der Gruppe bestehend aus Polyethylen, Polypropylen, Polyacrylat, Polymethacrylat, Polymethylmethacrylat, Polyvinylidenchlorid, Polivinylidenfluorid, Polytetrafluorethylen, Polytetrafluorpropylen, Polyhexafluorpropylen, Copolymere davon und Kombinationen, insbesondere Blends, aus zwei oder mehreren der genannten Polyolefine.

Der Polyester kann insbesondere ausgewählt sein aus der Gruppe bestehend aus Polyethylenterephthalat, Polypropylenterephthalat, Polybutylenterephthalat, Copolymere davon und Kombinationen, insbesondere Blends, aus zwei oder mehreren der genannten Polyester.

Das Polyamid kann insbesondere ausgewählt sein aus der Gruppe bestehend aus Polyamid 6 (Polyamid aus Caprolactam), Polyamid 46 (Polyamid aus Tetramethylendiamin und Adipinsäure), Polyamid 6.6 (Polyamid aus Hexamethylendiamin und Adipinsäure), Polyamid 69 (Polyamid aus Hexamethylendiamin und Azelainsäure), Polyamid 6/12 (Polyamid aus Hexamethylendiamin und Dodecandisäure), Polyamid 1010 (Polyamid aus 1,10-Decandiamin und Sebacinsäure), Polyamid 11 (Polyamid aus alpha-Aminoundecansäure), Polyamid 12 (Polyamid aus Laurinlactam), Polyamid 1212 (Polyamid aus Dodecandiamin und Dodecandisäure), Seide, Copolymere davon und Kombinationen, insbesondere Blends, aus zwei oder mehreren der genannten Polyamiden.

Bei dem Fluorcarbon handelt es sich vorzugsweise um ein polymeres Fluorcarbon. Weiterhin handelt es sich bei dem Perfluorcarbon bevorzugt um ein polymeres Perfluorcarbon.

Das Fluorcarbon bzw. Perfluorcarbon kann insbesondere ausgewählt sein aus der Gruppe bestehend aus Polyvinylidenfluorid (PVDF), Polytetrafluorethylen (PTFE), Polytetrafluorpropylen, Polyhexafluorpropylen, Perfluoralkoxy-Polymere (PFA), Polychlortrifluorethylen (PCTFE), Copolymere aus Methacrylaten und Perfluoralkylacrylaten, Fluorelastomere wie Fluorkautschuk, perfluorierte Silikone wie perfluorierte Polysiloxane, Perfluorethylenpropylen-Copolymer (FEP), Perfluorpolyether (PFPE), Copolymere davon und Kombinationen, insbesondere Blends, aus zwei oder mehreren der genannten Fluorcarbone bzw. Perfluorcarbone.

Das Carbid, insbesondere Metallcarbid, kann insbesondere ausgewählt sein aus der Gruppe bestehend aus Siliziumcarbid, Zirkoniumcarbid, Borcarbid, Titancarbid, Tantalcarbid, Wolframcarbid und Kombinationen aus zwei oder mehreren der genannten Carbide, insbesondere Metallcarbide.

Das Nitrid, insbesondere Metallnitrid, kann insbesondere ausgewählt sein aus der Gruppe bestehend aus Bornitrid, Aluminiumnitrid, Galliumnitrid, Indiumnitrid, Kohlenstoffnitrid, Siliziumnitrid, Germaniumnitrid und Kombinationen aus zwei oder mehreren der genannten Nitride, insbesondere Metallnitride.

Das Metalloxid kann insbesondere ausgewählt sein aus der Gruppe bestehend aus Aluminiumoxid, Zirkoniumoxid, Calciumoxid, Magnesiumoxid, Titandioxid und Kombinationen aus zwei oder mehreren der genannten Metalloxide.

Das Metall kann insbesondere ausgewählt sein aus der Gruppe bestehend aus Kupfer, Silber, Gold, Zink, Nickel, Palladium, Platin, Kobalt, Eisen, Ruthenium, Titan, Zirkonium, Tantal, Wolfram und Kombinationen, insbesondere Legierungen, aus zwei oder mehreren der genannten Metalle.

In einer weiteren Ausführungsform handelt es sich bei der Oberfläche des Gegenstandes, insbesondere bei den Wandungsoberflächen der Vertiefungen, um eine Oberfläche, insbesondere Oberflächen, einer hydrophoben und/oder oleophoben Schicht.

Vorzugsweise ist die Oberfläche des Gegenstandes, insbesondere die Wandungsoberflächen der Vertiefungen, mit einer hydrophoben und/oder oleophoben Schicht beschichtet. Dabei kann die hydrophobe und/oder oleophobe Schicht die Oberfläche des Gegenstandes, insbesondere die Wandungsoberflächen der Vertiefungen, nur teilweise oder vollständig, d.h. vollflächig, beschichten. Erfindungsgemäß ist es besonders bevorzugt, wenn die Oberfläche des Gegenstandes, insbesondere die Wandungsoberflächen der Vertiefungen, vollständig mit einer hydrophoben und/oder oleophoben Schicht beschichtet ist.

Die hydrophobe und/oder oleophobe Schicht weist vorzugsweise ein hydrophobes und/oder oleophobes Material auf oder besteht vorzugsweise aus einem hydrophoben und/oder oleophoben Material.

Bei dem hydrophoben und/oder oleophoben Material kann es sich insbesondere um ein Fluorcarbon, vorzugsweise polymeres Fluorcarbon, Perflourcarbon, vorzugsweise polymeres Perfluorcarbon, einen Wachs, ein Paraffin, eine Siloxanverbindung, ein Polysiloxan wie Polydimethylsiloxan, ein Silanöl oder eine Kombination aus zwei oder mehreren der genannten hydrophoben und/oder oleophoben Materialien handeln.

Das Fluorcarbon bzw. Perfluorcarbon kann insbesondere ausgewählt sein aus der Gruppe bestehend aus Polyvinylidenfluorid (PVDF), Polytetrafluorethylen (PTFE), Polytetrafluorpropylen, Polyhexafluorpropylen, Perfluoralkoxy-Polymere (PFA), Polychlortrifluorethylen (PCTFE), Copolymere aus Methacrylaten und Perfluoralkylacrylaten, Fluorelastomere wie Fluorkautschuk, perfluorierte Silikone wie perfluorierte Polysiloxane, Perfluorethylenpropylen-Copolymer (FEP), Perfluorpolyether (PFPE) und Kombinationen aus zwei oder mehreren der genannten Fluorcarbone bzw. Perfluorcarbone.

In einer weiteren Ausführungsform weist die hydrophobe und/oder oleophobe Schicht eine Dicke von 1 $\mu$m bis 100 $\mu$m, insbesondere 10 $\mu$m bis 50 $\mu$m, vorzugsweise 10 $\mu$m bis 20 $\mu$m, auf.

Die Anwesenheit einer hydrophoben und/oder oleophoben Schicht auf der Oberfläche des Gegenstandes hat insbesondere den Vorteil, dass sich hierdurch die Benetzbarkeit der Oberfläche mit Flüssigkeiten wie vorzugsweise Wasser zusätzlich reduzieren lässt. Dadurch ist eine noch bessere Haltung und insbesondere selbstständige Erneuerung von Gasschichten in den Vertiefungen erzielbar.

In einer weiteren Ausführungsform handelt es sich bei dem Gegenstand um Flächengebilde, wie beispielsweise ein Band oder eine Folie. Bei der Folie kann es sich insbesondere um eine Klebefolie oder Transferfolie handeln. Unter dem Ausdruck "Transferfolie" soll im Sinne der vorliegenden Erfindung ein folienförmiges Trägermaterial verstanden werden, welches die Übertragung der erfindungsgemäß vorgesehenen Oberfläche auf ein beliebiges Substrat, wie beispielsweise Metall, Kunststoff, Keramik oder Glas, erlaubt. Insbesondere soll unter dem Ausdruck "Transferfolie" im Sinne der vorliegenden Erfindung eine Folie verstanden werden, welche von einem Zwischenträger auf einen endgültigen Untergrund oder ein endgültiges Substrat übertragen wird.

In einer weiteren Ausführungsform handelt es sich bei der Oberfläche des Gegenstandes um eine Oberfläche einer Folie, insbesondere einer Klebefolie oder Transferfolie. Die Folie kann die Oberfläche des Gegenstandes vollständig oder aber nur teilweise überziehen. Unter reibungsmindernden Gesichtspunkten und insbesondere unter Entgasungsgesichtspunkten ist jedoch ein vollständiger Überzug der Oberfläche des Gegenstandes mit der Folie bevorzugt.

In einer weiteren Ausführungsform handelt es sich bei dem Gegenstand um eine Schicht.

Vorzugsweise handelt es sich bei dem Gegenstand um eine Beschichtung, insbesondere für Oberflächen anderer Gegenstände, wie beispielsweise von Schläuchen, Rohren, Wasserschläuchen oder -rohren, wärmeübertragenden Anlagenteilen, Filtermembranen, Wasserleitungen, Schiffsrümpfen, Bootsrümpfen, Turbinen bzw. Turbinenschaufeln und dergleichen.

In einer weiteren Ausführungsform liegt der Gegenstand in Form eines Endlosbands, insbesondere folienförmigen Endlosbands, vor.

In einer alternativen Ausführungsform liegt der Gegenstand in konfektionierter, insbesondere abgelängter, Form vor.

In einer weiteren Ausführungsform handelt es sich bei dem Gegenstand um einen länglichen, vorzugsweise zylindrischen, insbesondere kreiszylindrischen, Hohlkörper. Bei der Oberfläche handelt es sich in diesem Fall bevorzugt um die Innenoberfläche des Hohlkörpers, d.h. um die Oberfläche, welche einen Hohlraum (Lumen) des Hohlkörpers umgibt. Bei dem Hohlkörper kann es sich insbesondere um einen Schlauch (flexibler länglicher Hohlkörper) oder ein Rohr (starrer länglicher Hohlkörper) handeln.

In einer weiteren Ausführungsform handelt es sich bei dem Gegenstand um eine Flüssigkeitsleitung wie insbesondere einen Schlauch oder ein Rohr, einen Kühler, einen Wärmeüberträger oder ein wärmeübertragendes Anlageteil, eine Filtermembran, einen Schiffsrumpf, einen Bootsrumpf, eine Turbine oder eine Turbinenschaufel. Bei der Flüssigkeitsleitung handelt es sich vorzugsweise um einen Wasserschlauch, wie beispielsweise Kühlwasserschlauch, Sanitärschlauch oder Trinkwasserschlauch, oder ein Wasserrohr, wie beispielsweise Kühlwasserrohr, Sanitärrohr oder Trinkwasserrohr.

Die Erfindung betrifft gemäß einem zweiten Aspekt ein Verfahren zur Herstellung eines Gegenstandes, insbesondere eines Gegenstandes gemäß erstem Erfindungsaspekt.

Das Verfahren zeichnet sich besonders dadurch aus, dass auf einer Oberfläche eines Gegenstandes mikrostrukturierte und sich verjüngende Vertiefungen erzeugt werden.

In einer weiteren Ausführungsform werden die Vertiefungen mittels Pressen, Prägen oder Gravieren erzeugt.

In einer weiteren Ausführungsform werden die Vertiefungen mittels einer materialabtragenden Technik, insbesondere mittels nasschemischem Ätzen, plasmaunterstütztem Ätzen, reaktivem Ionenätzen wie reaktivem Ionentiefenätzen, Ionenstrahlätzen wie reaktivem Ionenstrahlätzen, Sputtern wie Kathodenzerstäubung oder Laserabtrag, erzeugt.

Insbesondere können die Vertiefungen mittels Lithographie, bevorzugt Interferenzlithographie, und anschließendem Ionenätzen, wie beispielsweise reaktivem Ionentiefenätzen, erzeugt werden.

In einer weiteren Ausführungsform werden die Vertiefungen erzeugt, indem Negativformen der Vertiefungen auf der Oberfläche des Gegenstandes abgeformt werden.

Die Negativformen können insbesondere mittels nasschemischem Ätzen, plasma-unterstütztem Ätzen, reaktivem Ionenätzen wie reaktivem Ionentiefenätzen, Ionenstrahlätzen wie reaktivem Ionenstrahlätzen, Sputtern wie Kathodenzerstäubung, Laserabtrag oder mittels elektrolytischer Abscheidung hergestellt werden.

In einer weiteren Ausführungsform wird die Oberfläche des Gegenstandes, insbesondere der Vertiefungen, vor oder nach Erzeugen der Vertiefungen mit einem hydrophoben und/oder oleophoben Material, insbesondere mit einem Fluorcarbon, vorzugsweise Perfluorcarbon, beschichtet. Bezüglich in Frage kommender hydrophober und/oder oleophober Materialien wird vollständig auf die im Rahmen des ersten Erfindungsaspekts gemachten Ausführungen Bezug genommen.

Bezüglich weiterer Merkmale und Vorteile des Verfahrens, insbesondere des Gegenstandes sowie seiner Oberfläche und seiner Vertiefungen, wird zur Vermeidung von Wiederholungen ebenfalls vollständig auf die im Rahmen des ersten Erfindungsaspektes gemachten Ausführungen Bezug genommen.

Die Erfindung betrifft gemäß einem dritten Aspekt die Verwendung eines Gegenstandes gemäß der vorliegenden Erfindung, insbesondere gemäß erstem Erfindungsaspekt, zur

- Erzielung eines verringerten Reibungswiderstandes, insbesondere Strömungswiderstandes, bei Um- oder Durchströmung des Gegenstandes mit einer Flüssigkeit
und/oder

- Energieeinsparung oder Erhöhung der Transportgeschwindigkeit beim Transport von Festkörpern, wie beispielsweise Schiffs- oder Bootsrümpfen oder Turbinen(schaufeln), in einer Flüssigkeit
und/oder

- Energieeinsparung bei der Förderung von Flüssigkeiten, insbesondere in Flüssigkeitsleitungen wie Rohren oder Schläuchen, Wärmeaustauschern, Turbinen(schaufeln) oder Solarthermianlagen,

und/oder

- Verhinderung von Fouling, insbesondere Biofouling, beispielsweise bei Wasserschläuchen, Wasserrohren, Wasserleitungen, Kühlern, Wärmeübertragern oder wärmeübertragenden Anlagenteilen, Filtermembranen, Schiffsrümpfen oder Bootsrümpfen, und/oder

- zur Verhinderung von Eisbildung (Vereisung), und/oder

- zur Entgasung von Flüssigkeiten, insbesondere auf dem Gebiet der Medizintechnik, beispielsweise zur besseren Einbringung von Stents in einen menschlichen Körper, und/oder

- zur Erzielung einer kontinuierlichen Phasentrennung, d.h. einer kontinuierlichen Trennung von Gas und Flüssigkeit, und/oder

- Entgasung von Mikrofluidstrukturen und/oder

- Dispergierung, insbesondere feinen Dispergierung, eines Gases in einer Flüssigkeit, beispielsweise auf dem Gebiet der Medizintechnik oder Biotechnologie, wie beispielsweise zur Anreicherung von Sauerstoff in einer Nährlösung, insbesondere für ein schnelleres Zellwachstum.

Bezüglich weiterer Merkmale und Vorteile des Gegenstandes, insbesondere seiner Oberfläche und Vertiefungen, wird zur Vermeidung von Wiederholungen vollständig auf die im Rahmen der bisherigen Beschreibung gemachten Ausführungen Bezug genommen.

Weitere Merkmale und Vorteile der Erfindung ergeben sich aus der nachfolgenden Beschreibung von bevorzugten Ausführungsformen in Form von Beispielen, Figuren sowie der dazugehörigen Figurenbeschreibungen. Dabei können einzelne Merkmale der Erfindung jeweils für sich alleine oder in Kombination miteinander verwirklicht sein. Die nachfolgend beschriebenen Ausführungsformen dienen lediglich der weiteren Erläuterung der Erfindung, ohne diese hierauf zu beschränken.

FIGURENKURZBESCHREIBUNG:

In den Figuren ist Folgendes schematisch gezeigt:

Fig. 1:    die Oberfläche eines erfindungsgemäßen Gegenstandes,

Fig. 2:    ein Querschnitt durch den in Fig. 1 dargestellten Gegenstand entlang der Schnittfläche I-II.

AUSFÜHRLICHE FIGURENBESCHREIBUNG

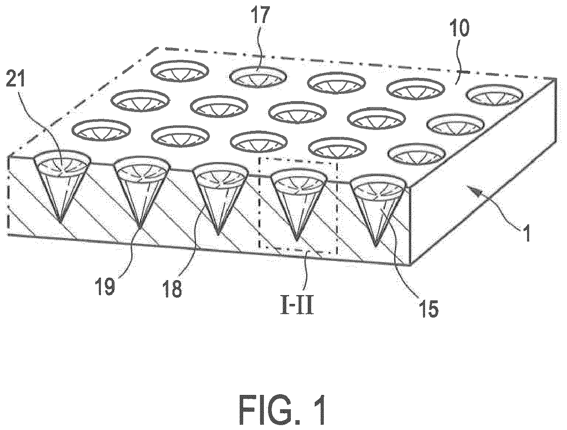

Fig. 1 zeigt einen Gegenstand 1 mit einer Oberfläche 10. Bei dem Gegenstand kann es sich beispielsweise um eine Folie, wie insbesondere eine Kleber- oder Transferfolie, handeln.

Die Oberfläche 10 weist mikrostrukturierte und sich verjüngende, vorzugsweise mikrostrukturierte und kegelförmige, insbesondere mikrostrukturierte und kreiskegelförmige, Vertiefungen 15 auf. Die Vertiefungen 15 sind in Form von parallel zueinander angeordneten Reihen auf der Oberfläche 10 des Gegenstandes 1 angeordnet.

Die Vertiefungen 15 besitzen jeweils eine kreisförmige Öffnung 17 sowie einen spitzförmigen Vertiefungsgrund (Vertiefungsboden) 19. Jede Vertiefung 15 ist durch eine umlaufende Wandung 18 begrenzt.

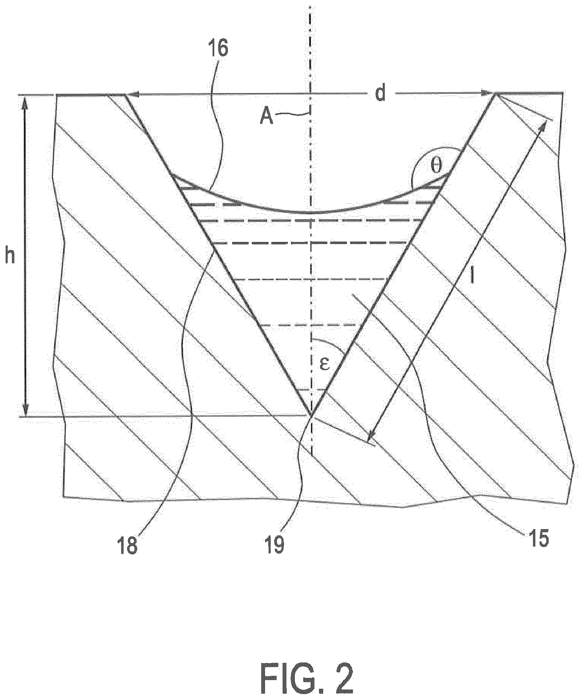

Die Öffnungen 17 weisen jeweils einen Durchmesser d und die Wandungen 18 jeweils eine Länge l auf (siehe Fig. 2). Weiterhin weist jede Vertiefung 15 eine Tiefe h auf, welche dem Abstand des Vertiefungsgrundes 19 von der Öffnung 17 entspricht (siehe ebenfalls Fig. 2).

Die Oberfläche 10 des Gegenstandes 1 setzt sich aus den Oberflächen der Wandungen 18 sowie den zwischen den Öffnungen 17 ausgebildeten Oberflächenbereichen zusammen.

Der Gegenstand 1 eignet sich mit seiner Oberfläche 10 vor allem zur Verminderung von Reibungswiderständen, insbesondere Strömungswiderständen, oder zur Entgasung von Flüssigkeiten, insbesondere wenn der Gegenstand 1 von einer Flüssigkeit, vorzugsweise Wasser, umströmt wird.

Die Verminderung des Reibungswiderstandes, vorzugsweise Strömungswiderstandes, bzw. die Entgasung beruht insbesondere darauf, dass sich beim Inkontaktbringen mit einer Flüssigkeit, vorzugsweise Wasser, Gasschichten 21, vorzugsweise Luftschichten, in den Vertiefungen 15 etablieren, wodurch die Kontaktfläche zwischen der Oberfläche 10 und der Flüssigkeit reduziert wird. Werden die Gasschichten 21 aus den Vertiefungen 15 verdrängt, kommt es aufgrund der Oberflächenstruktur vorzugsweise zu einer selbstständigen Erneuerung von Gasschichten in den Vertiefungen 15. Dadurch ist insbesondere eine Reduzierung des Reibungswiderstandes, vorzugsweise Strömungswiderstandes, bei einer Relativbewegung zwischen der Oberfläche 10 und der Flüssigkeit erzielbar.

Die Entgasungswirkung der Oberfläche beruht insbesondere darauf, dass in der Flüssigkeit gelöste Gasblasen in den Vertiefungen 15, insbesondere unter Ausbildung von Gasschichten, eingefangen werden. Wenn die Gasblasen groß genug sind, können sich diese ablösen und können abgeschieden werden. Dadurch kann ein Gas aus einem Flüssigkeitsstrom abgeführt werden. Ist der Vertiefungsgrund 19 gasdurchlässig ausgebildet, ist es möglich, das Gas an der Rückseite der Vertiefungen abzunehmen.

Fig. 2 zeigt eine Schnittdarstellung des in Fig.

1 dargestellten Gegenstandes 1 entlang der Schnittfläche I-II.

Zu erkennen ist, dass sich jede Vertiefung 15 durch einen halben Öffnungswinkel ε sowie beim Inkontaktbringen mit einer Flüssigkeit, vorzugsweise Wasser, durch einen Kontaktwinkel θ charakterisieren lässt.

Der halbe Öffnungswinkel ε definiert dabei einen Winkel zwischen der Wandung 18 (entspricht den Mantellinien der kegelförmigen Vertiefungen) und der Rotationsachse A der Vertiefungen.

Der Kontaktwinkel θ definiert einen Winkel, welcher einen Flüssigkeitstropfen, vorzugsweise Wassertropfen, 16 zu der Oberfläche der Wandung 18 bildet.

Der halbe Öffnungswinkel ε und der Kontaktwinkel θ stehen bevorzugt in folgender Beziehung zueinander: ε < θ - π/2.

AUSFÜHRUNGSBEISPIEL

Zunächst wurden Kegelstrukturen in einem Ätzprozess auf einem Siliziumwafer hergestellt, so dass die Kegel von der Oberfläche des Siliziumwafers mit der Spitze abstanden. Die Kegelstrukturen besaßen einen halben Öffnungswinkel ε von 10°, einen Radius von 0.005 mm, eine Höhe von 0.03 mm sowie einen gegenseitigen Abstand (Mitte zu Mitte) von 0.02 mm. Anschließend wurde diese Struktur in Polypropylen-Granulat (Novolen HV1106H) auf einer Heißpresse (Fabrikat Schabenthan, Plattentemperatur oben bzw. unten: 170°C) abgeformt. Anschließend wurde die so entstandene, strukturierte Polypropylen-Platte mit einem unter der Bezeichnung Antispread E 2/200 FE 60 kommerziell erhältlichen hydrophoben Material (Firma Dr. Till GmbH) mittels Tauchen beschichtet. Der Kontaktwinkel θ auf einer unstrukturierten, derart beschichteten Randfläche betrug ca. 110°C.

Die so erzeugten Proben wurden an einem Strömungskanal untersucht, der mit Wasser bei Strömungsgeschwindigkeiten von 0,5 bis 4 m/sec. betrieben wurde. Dabei zeigte sich durch mikroskopisch unterstützte Beobachtung, dass trotz dem Entlangströmen von Wasser auch über die Dauer der Untersuchung von ca. 2 Stunden der überwiegende Teil der kegelförmigen Vertiefungen mit Luft gefüllt blieb. Außerdem zeigte sich, dass kegelförmige Vertiefungen, aus denen die Luft entwichen war, wieder mit Luft aus dem Wasser gefüllt wurden. Auch Vertiefungen, die durch das Spülen mit einem Benetzungsmittel (beispielsweise Isopropanol) entgast waren, konnten auf diese Weise mit Luft aus dem Wasserstrom gefüllt werden.

**Patentansprüche**

1. Gegenstand mit einer Oberfläche, **dadurch gekennzeichnet, dass** die Oberfläche mikrostrukturierte und sich verjüngende Vertiefungen aufweist.

2. Gegenstand nach Anspruch 1, **dadurch gekennzeichnet, dass** es sich bei den Vertiefungen um sich durchgehend, vorzugsweise kontinuierlich, verjüngende Vertiefungen handelt.

3. Gegenstand nach Anspruch 1 oder 2, **dadurch gekennzeichnet, dass** es sich bei den Vertiefungen um kegelförmige Vertiefungen, kreiskegelförmige Vertiefungen, kegelstumpfförmige Vertiefungen, kreiskegelstumpfförmige Vertiefungen, pyramidenförmige Vertiefungen oder pyramidenstumpfförmige Vertiefungen handelt.

4. Gegenstand nach einem der vorhergehenden Ansprüche, **dadurch gekennzeichnet, dass** es sich bei den Vertiefungen um rotationssymmterische, insbesondere kreiskegelförmige, Vertiefungen handelt.

5. Gegenstand nach einem der vorhergehenden Ansprüche, **dadurch gekennzeichnet, dass** die Vertiefungen jeweils einen halben Öffnungswinkel ε und beim Inkontaktbringen mit einer Flüssigkeit, vorzugsweise Wasser, einen Kontaktwinkel θ aufweisen, welche der folgenden Gleichung genügen:

$$\varepsilon < \theta - \pi/2,$$

wobei

der halbe Öffnungswinkel ε einen Winkel zwischen einer Wandungsoberfläche der Vertiefungen und einer Längsachse, vorzugsweise Rotationsachse, der Vertiefungen definiert, und
der Kontaktwinkel θ einen Winkel definiert, welchen ein in den Vertiefungen enthaltener Flüssigkeitstropfen, vorzugsweise Wassertropfen, zu einer Wandungsoberfläche der Vertiefungen bildet.

6. Gegenstand nach Anspruch 5, **dadurch gekennzeichnet, dass** die Vertiefungen jeweils einen halben Öffnungswinkel ε von 2° bis 20°, insbesondere 5° bis 15°, vorzugsweise 8° bis 12°, und einen Kontaktwinkel θ von 90° bis 120°, insbesondere 100° bis 115°, vorzugsweise 105° bis 110°, aufweisen.

7. Gegenstand nach einem der vorhergehenden Ansprüche, **dadurch gekennzeichnet, dass** die Vertiefungen

- jeweils eine Tiefe von 2 μm bis 1000 μm, insbesondere 5 μm bis 50 μm, vorzugsweise 10 μm bis 30 μm,
und/oder

- eine Öffnung mit einem Durchmesser von 1 μm bis 250 μm, insbesondere 2.5 μm bis 25 μm, vorzugsweise 5 μm bis 10 μm,
und/oder
- eine Wandungslänge von 2 μm bis 1000 μm, insbesondere 5 μm bis 50 μm, vorzugsweise 10 μm bis 30 μm, aufweisen.

8. Gegenstand nach einem der vorhergehenden Ansprüche, **dadurch gekennzeichnet, dass** die Vertiefungen ausschließlich Abmessungen in einem Bereich von 0.1 μm bis 1000 μm, insbesondere 1 μm bis 250 μm, vorzugsweise 2.5 μm bis 25 μm, insbesondere 5 μm bis 10 μm, oder 10 μm bis 30 μm, aufweisen.

9. Gegenstand nach einem vorhergehenden Ansprüche, **dadurch gekennzeichnet, dass** die Vertiefungen in einer Dichte von 16 Vertiefungen bis $10^6$ Vertiefungen pro mm$^2$, insbesondere 1600 Vertiefungen bis $1.6 \times 10^5$ Vertiefungen pro mm$^2$, vorzugsweise $10^4$ Vertiefungen bis $4 \times 10^4$ Vertiefungen pro mm$^2$, auf der Oberfläche des Gegenstandes ausgebildet sind.

10. Gegenstand nach einem der vorhergehenden Ansprüche, **dadurch gekennzeichnet, dass** die Vertiefungen jeweils ein Hohlraumvolumen von 0.5 μm$^3$ bis $50 \times 10^6$ μm$^3$, insbesondere 8 μm$^3$ bis $8 \times 10^3$ μm$^3$, vorzugsweise 60 μm$^3$ bis $10^3$ μm$^3$, und/oder die Oberflächen der Vertiefungen insgesamt einen Flächenanteil von 50 % bis 99 %, insbesondere 70 % bis 97 %, bevorzugt 85 % bis 95 %, aufweisen, bezogen auf die Oberfläche des Gegenstandes.

11. Gegenstand nach einem vorhergehenden Ansprüche, **dadurch gekennzeichnet, dass** der Gegenstand ein Material aufweist oder aus einem Material besteht, welches ausgewählt ist aus der Gruppe bestehend aus Polymer wie thermoplastisches Polymer, Polyolefin, Polyester, Polyamid, Polyurethan wie thermoplastisches Polyurethan, Elastomer, Polyimid, Polyetherketon, Polyetheretherketon, Polysiloxan wie Polydimethylsiloxan, Fluorcarbon, Perfluorcarbon, Keramikmaterial, Siliziumdioxid wie Quarz, Glas, Carbid wie Metallcarbid, Nitrid wie Metallnitrid, Metalloxid, Metall und Kombinationen, insbesondere Verbundstoffe, aus zwei oder mehreren der genannten Materialien.

12. Gegenstand nach einem vorhergehenden Ansprüche, **dadurch gekennzeichnet, dass** die Oberfläche des Gegenstandes, insbesondere der Vertiefungen, eine hydrophobe und/oder oleophobe Schicht, vorzugsweise in Form einer Beschichtung, aufweisen, wobei die hydrophobe und/oder oleophobe Schicht ein hydrophobes und/oder oleophobes Material aufweist oder aus einem solchen Material besteht, welches vorzugsweise ausgewählt ist aus der Gruppe bestehend aus Fluorcarbon, vorzugsweise polymeres Fluorcarbon, Perflourcarbon, vorzugsweise polymeres Perfluorcarbon, Wachs, Paraffin, Siloxanverbindung, Polysiloxan wie Polydimethylsiloxan, Silanöl oder eine Kombination aus zwei oder mehreren der genannten hydrophoben und/oder oleophoben Materialien.

13. Gegenstand nach einem der vorhergehenden Ansprüche, **dadurch gekennzeichnet, dass** es sich bei dem Gegenstand um

- eine Beschichtung
oder
- um ein Flächengebilde, insbesondere um eine Folie, bevorzugt um eine Klebefolie oder Transferfolie,
oder
- um eine Flüssigkeitsleitung wie Schlauch oder Rohr, einen Kühler, einen Wärmeüberträger oder ein wärmeübertragendes Anlageteil, eine Filtermembran, einen Schiffsrumpf, einen Bootsrumpf, eine Turbine oder eine Turbinenschaufel handelt.

14. Verfahren zur Herstellung eines Gegenstandes, insbesondere nach einem der vorhergehenden Ansprüche, **dadurch gekennzeichnet, dass** auf einer Oberfläche eines Gegenstands mikrostrukturierte und sich wenigstens abschnittsweise verjüngende Vertiefungen erzeugt werden.

15. Verwendung eines Gegenstandes nach einem der Ansprüche 1 bis 13 zur

- Erzielung eines verringerten Reibungswiderstandes, insbesondere Strömungswiderstandes, bei Um- oder Durchströmung des Gegenstandes mit einer Flüssigkeit und/oder
- Energieeinsparung oder Erhöhung der Transportgeschwindigkeit beim Transport von Festkörpern, wie beispielsweise Schiffs- oder Bootsrümpfen oder Turbinen(schaufeln), in einer Flüssigkeit
und/oder
- Energieeinsparung bei der Förderung von Flüssigkeiten, insbesondere in Flüssigkeitsleitungen wie Rohren oder Schläuchen, Wärmeaustauschern, Turbinen(schaufeln) oder Solarthermianlagen,
und/oder
- Verhinderung von Fouling, insbesondere Biofouling, beispielsweise bei Wasserschläuchen, Wasserrohren, Wasserleitungen, Kühlern, Wärmeüberträgern oder wärmeübertragenden Anlagenteilen, Filtermembranen, Schiffsrümpfen oder Bootsrümpfen,

und/oder
- Verhinderung von Eisbildung (Vereisung), und/oder
- Entgasung von Flüssigkeiten, insbesondere auf dem Gebiet der Medizintechnik, und/oder
- zur Erzielung einer kontinuierlichen Phasentrennung, d.h. einer kontinuierlichen Trennungen von Gas und Flüssigkeit, und/oder
- Entgasung von Mikrofluidstrukturen und/oder
- Dispergierung eines Gases in einer Flüssigkeit, insbesondere auf dem Gebiet der Medizintechnik oder Biotechnologie.

FIG. 1

FIG. 2

Europäisches
Patentamt

European
Patent Office

Office européen
des brevets

**EUROPÄISCHER RECHERCHENBERICHT**

Nummer der Anmeldung

EP 17 16 8337

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2007/141306 A1 (KASAI TOSHIHIRO [JP] ET AL) 21. Juni 2007 (2007-06-21) * Zusammenfassung * * Absatz [0001] * * Absatz [0007] - Absatz [0012] * * Absatz [0022] - Absatz [0026] * * Absatz [0029] - Absatz [0035] * * Ansprüche * * Abbildung * ----- | 1-15 | INV. B08B17/06 B82Y30/00 B81C1/00 |
| X | US 2004/126538 A1 (CORCORAN CRAIG S [US] ET AL) 1. Juli 2004 (2004-07-01) * Zusammenfassung * * Absatz [0002] - Absatz [0003] * * Absatz [0026] - Absatz [0030] * * Absatz [0034] * * Ansprüche * * Abbildungen * ----- | 1-15 | |
| X | US 2006/251859 A1 (D'URSO BRIAN R [US]) 9. November 2006 (2006-11-09) * Zusammenfassung * * Absatz [0003] - Absatz [0009] * * Absatz [0022] - Absatz [0043] * * Ansprüche * * Abbildungen * ----- | 1-3,5-15 | RECHERCHIERTE SACHGEBIETE (IPC) B08B B82Y B29C B81C |
| X | WO 2012/058086 A1 (3M INNOVATIVE PROPERTIES CO [US]; ZHANG JUN-YING [US] ET AL) 3. Mai 2012 (2012-05-03) * Zusammenfassung * * Seite 1, Zeile 22 - Seite 4, Zeile 12 * * Seite 7, Zeile 11 - Zeile 28 * * Ansprüche * * Abbildungen * ----- -/-- | 1,2,5-15 | |

Der vorliegende Recherchenbericht wurde für alle Patentansprüche erstellt

| Recherchenort | Abschlußdatum der Recherche | Prüfer |
|---|---|---|
| Den Haag | 29. August 2017 | van der Zee, Willem |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

**EUROPÄISCHER RECHERCHENBERICHT**

Nummer der Anmeldung

EP 17 16 8337

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 101 34 362 A1 (CREAVIS TECH & INNOVATION GMBH [DE]) 30. Januar 2003 (2003-01-30) * Zusammenfassung * * Absatz [0012] * * Absatz [0019] - Absatz [0021] * * Absatz [0032] - Absatz [0034] * * Absatz [0038] - Absatz [0047] * * Absatz [0061] - Absatz [0068] * * Ansprüche * * Abbildungen * ----- | 1,2,5-15 | |
| X | WO 2011/098266 A1 (RENOLIT SE [DE]; EISER WOLFGANG [DE]; MASANEK FRANK [DE]; BRUEGGEMANN) 18. August 2011 (2011-08-18) * Zusammenfassung * * Absatz [0001] * * Absatz [0005] - Absatz [0012] * * Absatz [0022] - Absatz [0023] * * Ansprüche * * Abbildungen * ----- | 1,2,5-15 | |
| X | US 2001/051273 A1 (VEERASAMY VIJAYEN S [US]) 13. Dezember 2001 (2001-12-13) * Zusammenfassung * * Absatz [0009] - Absatz [0012] * * Absatz [0045] * * Ansprüche * * Abbildungen * ----- | 1,2,5,6, 12-15 | RECHERCHIERTE SACHGEBIETE (IPC) |
| A | WO 2006/008153 A1 (BASF AG [DE]; WEISS HORST [DE]; HAEDICKE ERICH [DE]; KELLER HARALD [DE]) 26. Januar 2006 (2006-01-26) * Zusammenfassung * * Seite 1, Zeile 3 - Zeile 12 * * Seite 5, Zeile 19 - Seite 7, Zeile 12 * * Seite 10, Zeile 1 - Seite 11, Zeile 31 * * Ansprüche * ----- | 1,4,7, 9-15 | |

Der vorliegende Recherchenbericht wurde für alle Patentansprüche erstellt

| Recherchenort | Abschlußdatum der Recherche | Prüfer |
|---|---|---|
| Den Haag | 29. August 2017 | van der Zee, Willem |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 8337

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2017

| Im Recherchenbericht angeführtes Patentdokument | Datum der Veröffentlichung | Mitglied(er) der Patentfamilie | Datum der Veröffentlichung |
|---|---|---|---|
| US 2007141306 A1 | 21-06-2007 | EP 1968753 A1<br>JP 2009521552 A<br>US 2007141306 A1<br>WO 2007075407 A1 | 17-09-2008<br>04-06-2009<br>21-06-2007<br>05-07-2007 |
| US 2004126538 A1 | 01-07-2004 | DE 10392199 T5<br>US 2004126538 A1<br>US 2005118393 A1<br>WO 03061949 A1 | 05-01-2005<br>01-07-2004<br>02-06-2005<br>31-07-2003 |
| US 2006251859 A1 | 09-11-2006 | US 2006251859 A1<br>WO 2006121909 A2 | 09-11-2006<br>16-11-2006 |
| WO 2012058086 A1 | 03-05-2012 | CN 103180060 A<br>EP 2632614 A1<br>JP 2013543990 A<br>US 2013295327 A1<br>WO 2012058086 A1 | 26-06-2013<br>04-09-2013<br>09-12-2013<br>07-11-2013<br>03-05-2012 |
| DE 10134362 A1 | 30-01-2003 | KEINE | |
| WO 2011098266 A1 | 18-08-2011 | EP 2533912 A1<br>WO 2011098266 A1 | 19-12-2012<br>18-08-2011 |
| US 2001051273 A1 | 13-12-2001 | KEINE | |
| WO 2006008153 A1 | 26-01-2006 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050061221 A1
- WO 2005005679 A2

- WO 2007099141 A2

**In der Beschreibung aufgeführte Nicht-Patentliteratur**

- **VOROBYEV et al.** Multifunctional surfaces produced by femtosecond laser pulses. *Journal of Applied Physics,* 2015, vol. 117, 033103
- **PARK et al.** A numerical study of the effects of superhydrophobic surface on skin-friction drag in turbulent channel flow. *Physics of Fluids,* 2013, vol. 25, 110815
- **WILSON.** Superhydrophobic surfaces reduce drag. *Physics Today,* Oktober 2009, 16-19
- **BARBIER et al.** Large Drag Reduction over Superhydrophobic Riblets. *arXiv: 1406.0787vl [physics.flu-dyn,* 02. Juni 2014

- **LEE et al.** Underwater Restoration and Retention of Gases on Superhydrophobic Surfaces for Drag Reduction. *Physical Review Letters PRL,* 2011, vol. 106, 014502
- **CHOI et al.** Effective slip and friction reduction in nanograted superhydrophobic microchannels. *Physics of Fluids,* 2006, vol. 18, 087105
- Drag Reduction In Turbulent Flows Over Micropatterned Superhydrophobic Surfaces. **DANIELLO.** Masters Theses. University of Massachusetts-Amherst, Februar 2014
- **JAHANMIRI et al.** Large Eddy Simulation Of Turbulent Drag Reduction By V-Shaped Riblets. *International Journal of Latest Research in Science and Technology,* Januar 2015, vol. 4 (1), 42-46